# EUROPÄISCHE PATENTSCHRIFT

(11) **EP 0 366 919 B1**
(45) Veröffentlichungstag und Bekanntmachung des Hinweises auf die Patenterteilung: **14.12.1994**
(21) Anmeldenummer: 89117350.2
(22) Anmeldetag: 20.09.1989
(51) Int. Cl.: H04N 7/13, H03H 17/02, G06F 15/336

(54) **Zweidimensionales digitales Filter**
Two-dimensional digital filter
Filtre numérique bidimensionnel

(30) Priorität: 03.11.1988 DE 3837329
(43) Veröffentlichungstag der Anmeldung: 09.05.1990
(73) Patentinhaber: ROBERT BOSCH GMBH, 70442 Stuttgart (DE)
(72) Erfinder: Vogt, Wilhelm, D-4791 Herbram (DE); Biere, Dietmar, Dr., D-3200 Hildesheim (DE)
(74) Vertreter: Friedmann, Jürgen, Dr.-Ing.

(56) Entgegenhaltungen:
- IEEE/IEICE GLOBAL TELECOMMUNICATIONS CONFERENCE 1987 vol. 1, 15 November 1987,TOKYO Seiten 36 - 39; S. OKUBO ET AL.: "PROGRESS OF CCITT STANDARDIZATION ONNx384kbit/s VIDEO CODEC"
- IEE PROCEEDINGS E. COMPUTERS & DIGITAL TECHNIQUES. vol.129, no. 1E, Januar 1982, OLD-WOKING, SURREY Seiten 21 - 27; P.J. ALLEN ET AL.:"NEW APPROACH TO IMPLEMENTATION OF DIGITAL FILTERS USING SEVERAL PROCESSORS"
- Digitale Filter in der Videotechnik, Schönfelder, Drei-R-Verlag, Berlin, 1988, Seiten 108-121
- Halbleiter-Schaltungstechnik, Tietze/Schenk, Springer-Verlag, 1986, Seiten 288-291

## Beschreibung

Die Erfindung geht aus von einem zweidimensionalen Filter nach der Gattung des Anspruchs.

Ein solches Filter ist z.B. aus dem Artikel "Progress of CCITT Standardization on nx 384 K bit/s Video Codec" in IEEE/IEICI Global Telecommunications Conference 1987, vol. 1, 15.11.87, Tokyo, Seiten 36-39 bekannt.

Zur Übertragung von Bildern, beispielsweise beim Schmalband-Bildtelefon, sind verschiedene datenreduzierende Codierverfahren bekannt geworden. Einen wesentlichen Beitrag zur Datenreduktion liefert dabei eine Interframe-DPCM. Eine weitere Reduktion der zu übertragenden Daten ist durch eine blockweise Codierung möglich. Dabei durchlaufen die zu codierenden Signale blockweise eine Prädiktionsschleife, in welcher zur Verkleinerung des Prädiktionsfehlers ein Schleifenfilter eingefügt sein kann. Dieses liefert damit einen weiteren Beitrag zur Verringerung der zu übertragenden Datenmenge.

Aufgabe der vorliegenden Erfindung, wie sie im Anspruch gekennzeichnet ist, ist es, ein zweidimensionales digitales Filter vorzuschlagen, das sich mit möglichst geringem technischen Aufwand verwirklichen läßt. Das erfindungsgemäße Filter hat den Vorteil, daß es sich trotz der großen Zahl von Rechenoperationen in einer vorgegebenen Zeit mit wenigen auf dem Markt erhältlichen Bausteinen verwirklichen läßt.

Für eine Codiereinrichtung für ein Schmalband-Bildtelefon mit der sogenannten CIF-Auflösung des Luminanzanteils von 360 mal 288 Bildelementen kann ein gemäß der Erfindung ausgeführtes Schleifenfilter für den Luminanzanteil mit zwei Signalprozessoren verwirklicht werden.

Ein Ausführungsbeipiel der Erfindung ist in der Zeichnung anhand mehrerer Figuren dargestellt und in der nachfolgenden Beschreibung näher erläutert. Es zeigt:
- Fig. 1: ein Blockschaltbild einer Sendeeinrichtung für ein Schmalband-Bildtelefon,
- Fig. 2: ein Blockschaltbild eines Ausführungsbeispiels eines erfindungsgemäßen Filters,
- Fig. 3: eine Aufstellung von Gleichungen und
- Fig. 4: eine schematische Darstellung der Filterung eines Blocks.

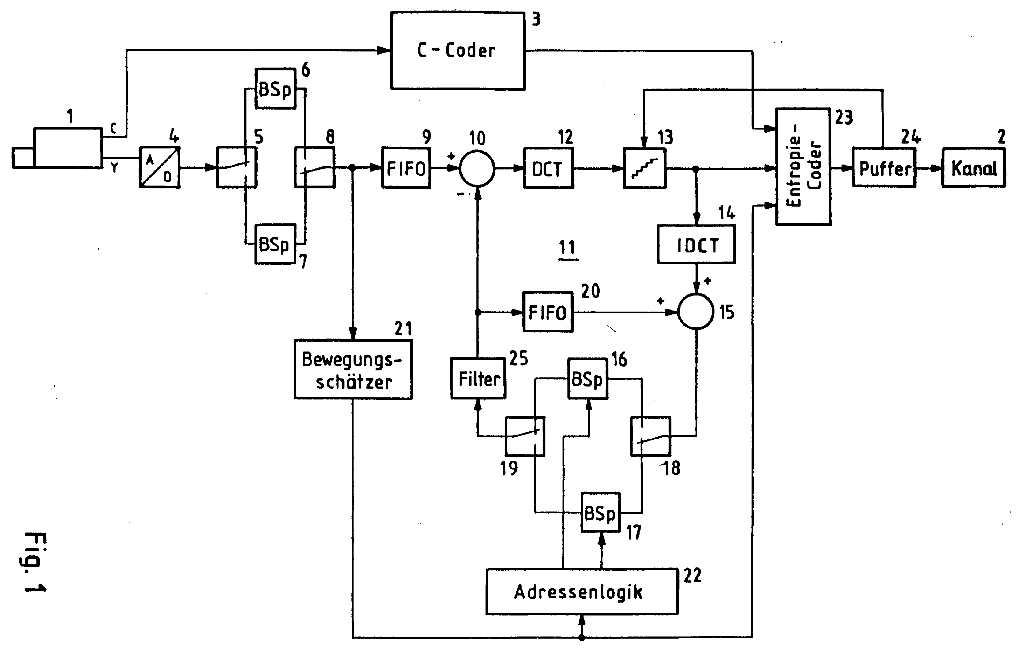

Die in Fig. 1 dargestellte Schaltungsanordnung stellt eine Sendeeinrichtung für ein Schmalband-Bildtelefon dar, wobei die Ausgangssignale einer Videokamera 1 analog/digital-gewandelt und anschließend unter Anwendung datenreduzierender Verfahren derart codiert werden, daß sie über einen schmalbandigen Kanal 2 zu einem Empfänger übertragen werden können. Die im Zusammenhang mit der Schaltungsanordnung nach Fig. 1 genannten Zahlenangaben beziehen sich auf die sogenannte CIF-Auflösung von 360 x 288 Bildelementen für den Luminanzanteil und von jeweils 180 x 144 Bildelementen für die Chrominanzanteile U, V. Die Kapazität des Übertragungskanals 2 beträgt 64000 Bit/s.

Zur Reduzierung des Datenstroms tragen im wesentlichen die folgenden bekannten Verfahren bei: Reduzierung der Bewegungsauflösung (es wird nur jedes dritte Bild übertragen), DPCM (Interframe), diskrete Cosinus-Transformation (DCT), adaptive Quantisierung und Entropie-Codierung. Ferner ist eine Umschaltung auf eine Intraframe-Codierung vorgesehen.

Die Codierung des Luminanzsignals wird im folgenden anhand einzelner Funktionseinheiten erläutert, während die Codierung der Chrominanzsignale U, V nur durch eine Funktionseinheit 3 dargestellt ist, da diese Codierung in ähnlicher Weise wie die Codierung des Luminanzsignals Y erfolgt.

Die Ausgangssignale des Analog/Digital-Wandlers 4 werden über einen Umschalter 5 bildweise abwechselnd in einen von zwei Bildspeichern 6, 7 eingeschrieben. Durch entsprechende Steuerung eines weiteren Umschalters 8 sowie im einzelnen nicht dargestellte Adressierung beim Auslesen wird jedes dritte Bild aus den Speichern 6, 7 ausgelesen, so daß sich bereits eine Datenreduktion um den Faktor 3 ergibt.

Nach einer Zwischenspeicherung zur Zeitanpassung in einem FIFO-Speicher 9 gelangen die Signale zu einer Subtraktionsschaltung 10, welche Teil einer Prädiktionsschleife 11 ist. In einer Schaltung 12 zur diskreten Cosinus-Transformation werden die Ausgangssignale der Subtraktionsschaltung - also die Differenzen zwischen dem jeweils von der Kamera erzeugten Signal und dem Signal eines gespeicherten Bildes - blockweise transformiert. Zu einem Block gehören jeweils n Bildelemente aus n aufeinanderfolgenden Zeilen, die eine Teilfläche des Bildes von n x n Bildelementen darstellen. Meistens werden Blöcke der Größe 8 x 8 Bildelemente vorgeschlagen. Bei der Realisierung der Erfindung haben sich für die Luminanz Blöcke von 16 x 16 Bildelementen und für die Chrominanz jeweils 8 x 8 Bildelemente große Blöcke als günstig herausgestellt.

Da die diskrete Cosinus-Transformation an sich bekannt ist (siehe Ahmed N., Natarajan T. und Rao R.: Discrete Cosine Transform, IEEE Transactions C-23 (1974), Seiten 90 bis 93), sei im folgenden nur kurz erwähnt, daß durch die diskrete Cosinus-Transformation jeweils für einen Block aus n x n Bildelementen Koeffizienten ermittelt werden, welche dem Gleichanteil des Signals (also der mittleren Helligkeit), der Amplitude einer Grundwelle, deren Periode der doppelten Blocklänge entspricht, und den Amplituden der Oberwellen entsprechen. Je nach Bildinhalt nimmt die Amplitude der Oberwellen mit der Ordnungszahl der jeweiligen Oberwelle mehr oder weniger stark ab, so daß für einen großen Anteil der Blöcke nur der Gleichanteil, die Grundwelle und/oder wenige Oberwellen zu übertragen sind.

Die Ausgangssignale der Schaltung 12 werden einem steuerbaren Quantisierer 13 zugeführt, der in Abhängigkeit von einem zugeführten Steuersignal eine gröbere oder feinere Quantisierung vornehmen kann. Die quantisierten Signale werden dann innerhalb der Prädiktionsschleife 11 einer Schaltung 14 zur inversen diskreten Cosinus-Transformation zugeleitet und über eine Addierschaltung 15 in weitere Bildspeicher 16, 17 eingelesen. Die Bildspeicher 16, 17 stellen einen Prädiktionsspeicher dar. Es werden zwei Bildspeicher verwendet, um ein Lesen zu ermöglichen, während neue Signale eingeschrieben werden. Dazu werden die Umschalter 18, 19 entsprechend gesteuert. Die aus dem Prädiktionsspeicher 16, 17 ausgelesenen Signale gelangen zur Subtraktionsschaltung 10 und über einen zur Zeitanpassung dienenden FIFO-Speicher 20 zur Addierschaltung 15.

Um eine genauere Prädiktion auch bei bewegten Bildern zu erhalten, ist ein Bewegungsschätzer 21 vorgesehen, der durch Vergleich aufeinanderfolgender Bilder jeweils für einen Block einen Bewegungsvektor erzeugt. Die Bewegungsvektoren werden einer Adressierlogik 22 zugeführt, so daß beim blockweisen Lesen der Signale aus dem Prädiktionsspeicher 16, 17 bereits eine durch Bewegung verursachte Verschiebung des Inhalts des jeweiligen Blocks zwischen dem gespeicherten und dem jeweils aktuellen Bild berücksichtigt wird.

Die Ausgangssignale des Quantisierers 13, des Coders 3 für die Chrominanzsignale U, V sowie die Ausgangssignale des Bewegungsschätzers 21 werden einem Entropie-Coder 23 zugeführt, bei welchem eingehende Codewörter entsprechend der Häufigkeit ihres Auftretens in kürzere bzw. längere ausgehende Codewörter gewandelt werden.

Da die durch die Codierung entstehenden Daten je nach Auftreten von Bewegung und Details im aufgenommenen Bild unregelmäßig anfallen, ist ein Pufferspeicher 24 vor der Übertragungsstrecke 2 vorgesehen, der beispielsweise die Kapazität eines Bildes aufweist. Droht der Pufferspeicher 24 überzulaufen, so wird die dem Puffer zugeführte Datenmenge reduziert, was insbesondere durch eine entsprechende Steuerung des Quantisierers 13 erfolgen kann.

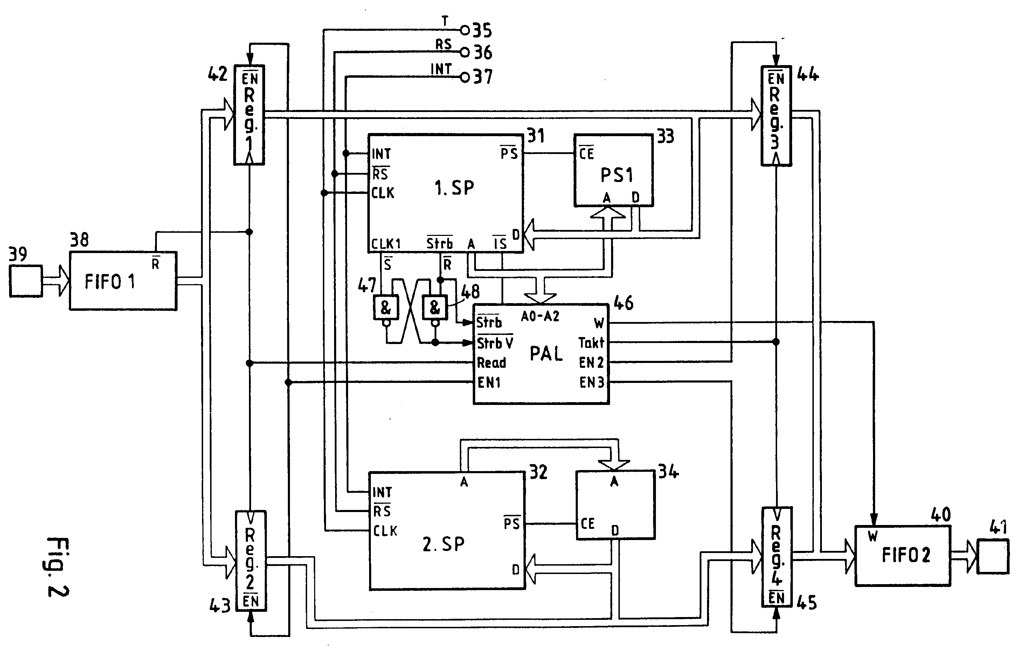

Ein Ausführungsbeispiel des zweidimensionalen digitalen Filters ist in Fig. 2 genauer dargestellt und umfaßt zwei Signalprozessoren 31, 32. Derartige Signalprozessoren sind als integrierte Schaltkreise auf dem Markt erhältlich. Für die erfindungsgemäßen Zwecke eignet sich beispielsweise ein integrierter Schaltkreis vom Typ TMS 320C25. Jedem der Signalprozessoren 31, 32 ist ein Programmspeicher 33, 34 zugeordnet, der bei dem Ausführungsbeispiel nach Fig. 2 aus einer weiteren integrierten Schaltung besteht. Es sind jedoch auch bereits Signalprozessoren mit integriertem Programmspeicher erhältlich.

Über einen Eingang 35 erhalten die Signalprozessoren 31, 32 ein Taktsignal T mit einer Frequenz von beispielsweise 40 MHz. Weitere Eingänge 36, 37 sind für ein Rücksetzsignal RS und ein Interrupt-Signal INT vorgesehen. Das Rücksetzsignal RS wird beim Einschalten benötigt, während das Signal INT jeweils zu Beginn eines Blocks einen Interrupt auslöst, was die Verarbeitung der zu dem jeweiligen Block gehörenden Signale zur Folge hat. Die Erzeugung dieser Signale ist an sich bekannt und braucht zur Erläuterung der Erfindung nicht näher ausgeführt zu werden. Im Zusammenhang mit dem Signal INT wird auf die von der Anmelderin eingereichten Patentanmeldung P 38 27 219.9 hingewiesen, in welcher eine Schaltungsanordnung beschrieben ist, mit welcher Taktimpulsfolgen für einzelne Funktionseinheiten eines Schmalband-Bildtelefons erzeugt werden.

Ein erster FIFO-Speicher 38 dient zur Zwischenspeicherung der über den Eingang 39 vom Prädiktionsspeicher 16, 17 (Fig. 1) zugeführten Signale jeweils eines Blocks. Ausgangsseitig ist ein zweiter FIFO-Speicher 40 vorgesehen, an dessen Ausgang 41 die gefilterten Daten zur Weiterleitung an die Subtraktionsschaltung 10 zur Verfügung stehen.

Die Ausgangssignale des FIFO-Speichers 38 können über Eingangsregister 42, 43 den Daten-Ein/Ausgängen der Signalprozessoren 31, 32 zugeführt werden. Die gefilterten Signale gelangen von den Daten-Ein/Ausgängen der Signalprozessoren 31, 32 über Ausgangsregister 44, 45 zum Eingang des FIFO-Speichers 40. Die Daten-Ein/Ausgänge der Signalprozessoren 31, 32 sind ferner mit Datenausgängen des jeweiligen Programmspeichers 33, 34 verbunden. Dadurch kann durch Ausgabe einer entsprechenden Adresse vom Signalprozessor an den zugehörigen Programmspeicher das jeweils erforderliche Programm in den Signalprozessor geladen werden.

Eine Logikschaltung, die in vorteilhafter Weise durch eine programmierbare Logikschaltung (PAL) gebildet wird, wird vom Signalprozessor 31 gesteuert und erzeugt ein Lesesignal READ, das den Eingangsregistern 42, 43 als Takt und dem FIFO-Speicher 83 als Lesesteuersignal zugeführt wird. Außerdem wird ein Signal EN1 erzeugt, das Enable-Eingängen der Eingangsregister 32 und 43 zugeleitet wird. Für die Ausgangsregister 44, 45 werden ebenfalls ein Taktsignal und zwei Enable-Signale EN2 und EN3 erzeugt. Ferner leitet die Logikschaltung 46 ein Schreibsteuersignal W für den FIFO-Speicher 40 ab. Schließlich erhält die Logikschaltung 46 vom Signalprozessor 31 Adressen und weitere Steuersignale, eines davon über zwei als Impulsformer geschaltete Nicht-Und-Schaltungen 47, 48.

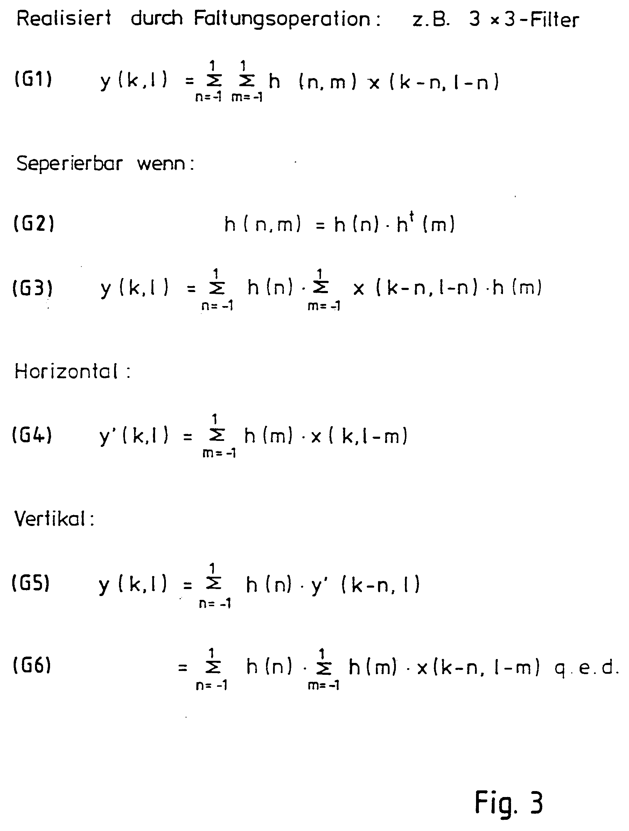

Im folgenden wird anhand von Fig. 3 die Funktion des Filters nach Fig. 2 erläutert. Gleichung (G1) beschreibt das Ausgangssignal y jeweils für ein Bildelement mit den Koordinaten k, 1 mit jeweils drei Koeffizienten in vertikaler Richtung und drei Koeffizienten in horizontaler Richtung. Das Eingangssignal x für ein Bildelement mit den Koordinaten k-n, 1-n wird mit dem jeweiligen Koeffizienten h (n, m) bewertet. Das Ergebnis wird von m = -1 bis m = 1 und von n = -1 bis n = 1 summiert. Da unter der als Gleichung (G2) angegebenen Bedingung eine Separierbarkeit besteht, kann anstelle von Gleichung (G1) auch Gleichung (G3) für y (k, 1) geschrieben werden. Dabei bedeutet die Summierung von m = -1 bis m = 1 eine horizontale Filterung, deren Ergebnis y′ (G4) als Zwischenergebnis vorübergehend abgelegt wird. Im Anschluß daran erfolgt die vertikale Filterung entsprechend der Gleichung (G5). Gleichung (G6) zeigt, daß durch Einsetzen der Zwischenergebnisse in Gleichung (G5) die ursprüngliche Gleichung (G1) entsteht.

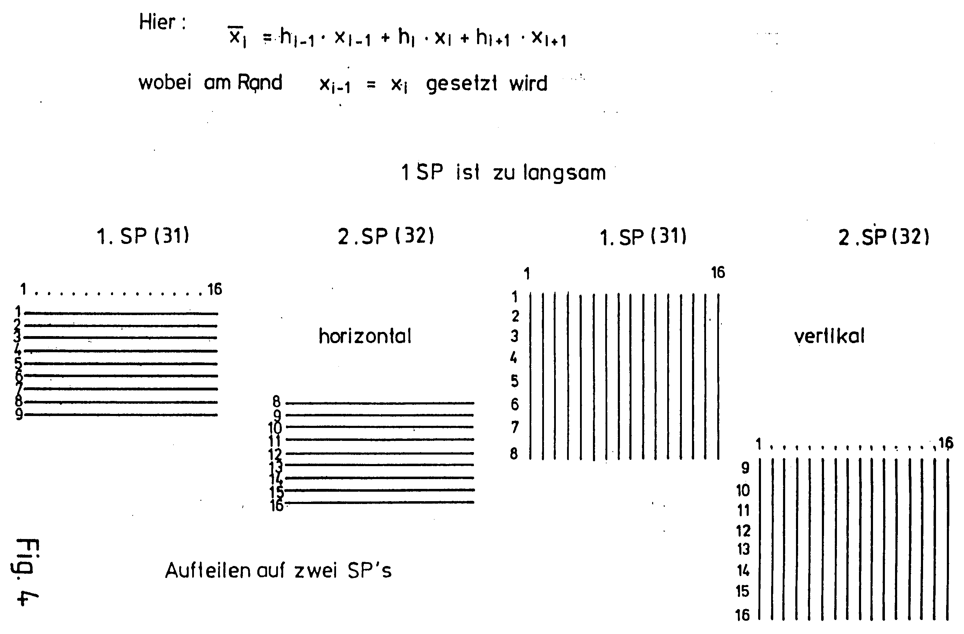

Gleichung (G7) in Fig. 4 stellt das Bildungsgesetz eines Wertes aus den Werten dreier benachbarter Bildelemente dar. Bei der Verarbeitung der Eingangssignale stellt x̅ᵢ einen Wert des Zwischenergebnisses dar, während bei der Verarbeitung der Zwischenergebnisse x̅ᵢ einen Wert des Endergebnisses darstellt.

Fig. 4 zeigt ferner die Aufteilung der Filterung auf beide Signalprozessoren. In einem ersten Schritt nehmen die Signalprozessoren eine horizontale Filterung vor - und zwar der Signalprozessor 31 für die erste bis neunte Zeile des jeweiligen Blocks und der zweite Signalprozessor 32 für die achte bis 16te Zeile. Die achte und neunte Zeile wird von beiden Signalprozessoren verarbeitet, da bei der anschließenden vertikalen Filterung die jeweils vorangegangene und die jeweils folgende Zeile in bereits horizontal gefilterter Form zur Verfügung stehen muß. So benötigt beispielsweise der erste Signalprozessor 31 zur Erzeugung der Ausgangssignale der achten Zeile die Zwischenergebnisse der siebten, der achten und auch der neunten Zeile.

## Patentansprüche

1. Zweidimensionales digitales Filter für eine Einrichtung zur datenreduzierenden Übertragung von Bildern, wobei eine blockweise Codierung bzw. Decodierung erfolgt,
dadurch gekennzeichnet,
daß mehrere digitale Signalprozessoren (31, 32) parallel angeordnet sind, daß jedem Signalprozessor ein Teil eines Blocks zugeordnet ist, wobei sich die Blockteile überlappen und jeder Signalprozessor für seinen Teil eine horizontale und vertikale Filterung vornimmt, derart, daß die jeweils einen Block betreffenden Signale gleichzeitig in die Arbeitsspeicher der Signalprozessoren eingelesen werden, danach jeder Signalprozessor für den ihm zugeordneten Blockteil nacheinander eine horizontale und eine vertikale Filterung vornimmt, deren Zwischenergebnisse jeweils im Arbeitsspeicher ablegt und schließlich die Endergebnisse in einen ausgangsseitigen Speicher (40) einschreibt.

## Claims

1. Two-dimensional digital filter for a device for the data-reducing transmission of pictures, in which transmission a blockwise coding or decoding takes place, characterized in that a plurality of signal processors (31, 32) are disposed in parallel, and in that a section of a block is assigned to each signal processor, the block sections overlapping, and each signal processor carries out a horizontal and vertical filtering for its section in such a way that the signals relating in each case to a block are simultaneously read into the working memory of the signal processors, then each signal processor carries out sequentially, for the block section assigned to it, a horizontal and a vertical filtering, stores the interim results of the latter in each case in the working memory and, finally, writes the final results into an output memory (40).

## Revendications

1. Filtre numérique bidimensionnel pour un dispositif de transmission d'images à réduction de données, avec codage ou décodage par blocs,
caractérisé en ce que :
plusieurs processeurs de signal (31, 32), numériques sont montés en parallèle,
à chaque processeur de signal est associée une partie d'un bloc et les parties de bloc se chevauchent et chaque processeur de signal effectue pour sa partie un filtrage horizontal et vertical de façon que les signaux correspondant à un bloc soient inscrits en même temps dans les mémoires de travail des processeurs de signal,
puis chaque processeur de signal correspondant effectue pour la partie de bloc, successivement un filtrage horizontal et vertical dont les résultats intermédiaires sont inscrits respectivement dans une mémoire de travail, puis les résultats de sortie sont inscrits dans une mémoire de sortie (40).
